# EUROPÄISCHE PATENTANMELDUNG

(11) **EP 4 480 669 A1**
(43) Veröffentlichungstag der Anmeldung: **25.12.2024**
(21) Anmeldenummer: 24183229.4
(22) Anmeldetag: 19.06.2024
(51) Int. Cl.: B29C 48/92, B29C 48/96, G01L 3/10, H02P 29/02, B29B 7/72, G01L 5/00

(54) **ELEKTRONISCHES ÜBERLASTKUPPLUNGSSYSTEM**

(30) Priorität: 22.06.2023 DE 102023116456
(71) Anmelder: Brückner Maschinenbau GmbH, 83313 Siegsdorf (DE)
(72) Erfinder: Wolfgruber, Konrad, 83278 Traunstein (DE)
(74) Vertreter: Flach Bauer & Partner Patentanwälte mbB

(57) **Zusammenfassung**

Die vorliegende Erfindung betrifft ein elektronisches Überlastkupplungssystem für einen Extruderantrieb, ein Extruderantriebsystem und ein Verfahren zum sicheren Betreiben eines Extruders. Das Überlastkupplungssystem (1) umfasst zumindest einen Drehmomentsensor (30), der dazu eingerichtet ist Drehmomentdaten des Extruderantriebs (10) zu erfassen und eine Überlaststeuerungseinrichtung (50), die dazu eingerichtet ist basierend auf den erfassten Drehmomentdaten einen Lastzustand des Extruderantriebs (10) zu ermitteln. Die Überlaststeuerungseinrichtung (50) ist weiterhin dazu eingerichtet abhängig vom ermittelten Lastzustand in eine Motorsteuerung (40) des Extruderantriebs (10) einzugreifen, um ein Motordrehmoment eines der Motorsteuerung (40) zugeordneten Motors (14) zu reduzieren.

## Beschreibung

### Gebiet der Erfindung

Die vorliegende Erfindung betrifft ein elektronisches Überlastkupplungssystem für einen Extruderantrieb, ein Extruderantriebsystem, sowie ein Verfahren zum sichern Betreiben eines Extruders.

### Hintergrund

Extruder sind Maschinen, die zur Verarbeitung von verschiedenen Materialien verwendet werden. Die Materialien werden von dem Extruder durch eine Öffnung oder Düse gedrückt, um so kontinuierliche Längen von Produkten mit einer einheitlichen Querschnittsform, wie beispielsweise Kunststoffrohre, Kunststoffprofile oder Kunststofffolie herzustellen.

Typische Materialien, die zur Extrusion verwendet werden, umfassen Kunststoffe, wie PVC (Polyvinylchlorid), PE (Polyethylene, insbesondere HDPE und LDPE), PP (Polypropylen), PA (Polyamid), ABS (Acrylnitril-Butadien-Styrol-Copolymerisat), PC (Polycarbonat), SB (Styrolbutadien), PMMA (Polymethylmethacrylat), PUR (Polyurethan), PET (Polyethylenterephthalat) und PSU (Polysulfon), sogenannte Biowerkstoffe wie thermoplastische Stärke, Stärke, CA (Celluloseacetat), PLA (Polymilchsäure), PHB (Polyhydroxybuttersäure), sowie Verbundwerkstoffe basierend auf zumindest einem der vorgenannten Materialien. Die vorgenannten Materialien sind nur exemplarisch. Andere Kunststoffe oder Kombinationen von Kunststoffen können ebenso extrudiert werden.

Zur Extrusion werden zudem verschiedene Arten von Extrudern eingesetzt. Einzel- oder Einschneckenextruder umfassen eine rotierende Schnecke. Das Material wird durch die Schnecke gefördert, optional aufgeschmolzen und anschließend durch eine Öffnung/Düse gedrückt. Doppelschneckenextruder weisen zwei parallele Schnecken auf, die das Material gleichzeitig transportieren und mischen. Koextruder sind Extruder, die aufgeschmolzenes Material aus unterschiedlichen Extrudern beispielsweise in einer Düse zusammenführen und es so ermöglichen, mehrere Schichten von unterschiedlichen Materialien zu extrudieren. So ist die Herstellung von Verbundwerkstoffen oder Mehrschichtprodukten (z.B. mehrschichtiger Folien) möglich.

Um die Extruderschnecken anzutreiben, sind für gewöhnlich sehr hohe Drehmomente erforderlich, da u.a. das verwendete Kunststoffgranulat/-pulver zunächst durch Scherung (bzw. Reibungswärme) aufgeschmolzen wird und anschließend die aufgeschmolzenen Materialien mit sehr hohen Drücken (beispielsweise im Bereich von 150 bar bis 300 bar, vereinzelt sogar bis zu 500 bar) durch die Düse/Öffnung gedrückt werden müssen. Antriebsmotoren bringen hierfür Drehmomente im Bereich von beispielsweise 50 bis 100.000 Nm auf. Insbesondere Doppelschneckenextruder erfordern ein Getriebe, welches das Drehmoment gleichmäßig auf beide Schnecken überträgt. Zudem werden auch für andere Extruder, wie Einschneckenextruder oder Koextruder Getriebe eingesetzt, um die Antriebsleistung vom Motor an die jeweilige Schnecke(n) zu übertragen.

Um den Extruderantrieb (insbesondere Motor und/oder Getriebe) vor Schäden durch Überlast zu schützen, ist es üblich Überlastkupplungen vorzusehen. Überlast kann beispielsweise auftreten, wenn eine Schecke/die Schnecken durch den Einzug von Fremdkörpern blockiert, Elemente von einer Schnecke ausbrechen oder abplatzen und/oder eine Schnecke bricht. Herkömmliche Überlastkupplungen sind beispielsweise mechanisch oder pneumatisch betätigbar. Übersteigt die Last am Extruderantrieb einen Grenzwert (z.B. das maximalen Betriebsdrehmoment), wird die Überlastkupplung betätigt und der Motor vom Getriebe getrennt.

Mechanische Überlastkupplungen müssen häufig gewartet werden und sind oftmals nicht geeignet spezifische Überlastbedingungen, wie auftretende Drehmomentspitzen, zu erkennen. Pneumatisch betätigte Überlastkupplungen sind schwer, teuer, wartungsintensiv und störungsanfällig, sodass auch diese regelmäßig gewartet werden müssen. Zudem müssen diese Überlastkupplungen nach dem Auslösen wieder eingekuppelt werden, was zu unerwünschten Verzögerungen führt.

Jedes Einkuppeln und jede Wartung ist kosten- und zeitaufwändig, da in der Regel der Extruder hierzu angehalten werden muss, was zu Produktionsausfällen führt. Werden zudem auftretende Drehmomentspitzen nicht zuverlässig erkannt, kann dies zu Folgeschäden am Motor, am Getriebe und/oder am Extruder, insbesondere den Extruderschnecke(n) führen.

### Beschreibung der Erfindung

Es ist daher die Aufgabe der Erfindung, Extruderantriebe zu verbessern und einen sichern, insbesondere ausfallsicheren, Betrieb eines Extruderantriebs bzw. eines Extrusionssystems zu ermöglichen.

Die Aufgabe wird insbesondere durch ein elektronisches Überlastkupplungssystem nach Anspruch 1, durch ein Extruderantriebsystem gemäß Anspruch 12 sowie durch ein Verfahren gemäß Anspruch 14 gelöst. Weitere Aspekte der Erfindung sind in den abhängigen Ansprüchen, sowie in der nachfolgenden Beschreibung aufgeführt.

Insbesondere wird die Aufgabe durch ein elektronisches Überlastkupplungssystem für einen Extruderantrieb gelöst, wobei das Überlastkupplungssystem zumindest einen Drehmomentsensor umfasst, der dazu eingerichtet ist Drehmomentdaten des Extruderantriebs zu erfassen.

Der zumindest eine Sensor kann beispielsweise ein virtueller Sensor sein, der aus stellvertretenden Messgrößen, wie einem Motorstrom und/oder einer Motorspannung ein wirkendes Drehmoment eines Motors des Extruderantriebs ermittelt. In einem besonderen Aspekt der Erfindung kann der virtuelle Sensor ein Massenträgheitsmoment eines Rotors des Motors berücksichtigen, um so möglichst genaue Drehmomentdaten - auch bei schnellen Drehmomentänderungen - zu erhalten.

Zudem kann der zumindest eine Sensor auch ein physischer Sensor sein, der ein wirkendes Drehmoment, d.h. Drehmomentdaten, an einer Abtriebswelle eines Motors und/oder an einer Abtriebswelle eines Getriebes des Extruderantriebs erfasst. Beispielsweise umfasst der zumindest eine Sensor einen Drehmomentflansch, welcher zumindest einen Dehnmessstreifen umfassen kann. Der zumindest eine Sensor kann jedoch auch andere oder weitere Messprinzipien nutzen.

Es versteht sich, dass das elektronische Überlastkupplungssystem mehrere Sensoren zur Erfassung von Drehmomentdaten umfassen kann, wobei die Sensoren unterschiedlicher Art sein können und/oder dazu eingerichtet sein können, Drehmomentdaten an unterschiedlichen Stellen des Extruderantriebs zu erfassen.

Das elektronische Überlastkupplungssystem umfasst zudem eine Überlaststeuerungseinrichtung, die dazu eingerichtet ist basierend auf den erfassten Drehmomentdaten einen Lastzustand des Extruderantriebs zu ermitteln. Insbesondere kann die Überlaststeuerungseinrichtung dazu eingerichtet sein, den Lastzustand des Extruderantriebs in Echtzeit zu ermitteln. Zudem kann der Lastzustand durch zumindest einen Kennwert oder eine Vielzahl von Kennwerten beschrieben bzw. ermittelt werden. Werden mehrere Kennwerte zur Beschreibung des Lastzustands genutzt, können diese unterschiedlich oder gleich gewichtet werden. Die Kennwerte können insbesondere erfasste und/oder bearbeitete Drehmomentdaten umfassen.

Die Überlaststeuerungseinrichtung kann Software und/oder Hardware umfassen und kann als eigenständige Steuerungseinrichtung ausgeführt sein, oder in eine Motorsteuerung des Extruderantriebs integriert sein.

Zudem ist die Überlaststeuerungseinrichtung dazu eingerichtet, abhängig vom ermittelten Lastzustand in eine Motorsteuerung des Extruderantriebs einzugreifen, um ein Motordrehmoment eines der Motorsteuerung zugeordneten Motors zu reduzieren. Die Reduktion des Motordrehmoments kann dabei bis auf null gehen.

Der Motor, der der Motorsteuerung zugeordnet ist kann beispielsweise ein Drehstrommotor (z.B. Asynchronmotor, Synchronmotor) sein und die Motorsteuerung kann einen Frequenzumrichter umfassen. Die Motorsteuerung kann insbesondere eine Drehzahl- und/oder Drehmomentregelung umfassen, wobei die Drehzahl- und Drehmomentregelung als Kaskadenregelung ausgeführt sein können.

Durch den möglichen Eingriff der Überlaststeuerungseinrichtung in die Motorsteuerung und die damit verbundene Reduktion des Motordrehmoments können Überlastzustände effektiv vermieden oder zumindest auf ein Mindestmaß beschränkt werden, sodass das Risiko von Folgeschäden am Motor, am Getriebe und/oder am Extruder, insbesondere der Extruderschnecke(n) signifikant reduziert werden kann.

Durch das elektronische Überlastkupplungssystem können die Nachteile bekannter mechanischer und pneumatischer Überlastkupplungen ausgeräumt werden. Insbesondere kann das elektronische Überlastkupplungssystem sehr schnell reagieren. Zudem können unterschiedliche Lastzustände erkannt werden, sodass abhängig vom ermittelten Lastzustand unterschiedliche Eingriffe in die Motorsteuerung möglich sind. Ein Abschalten des Extruderantriebs, wie dies beim Auslösen einer mechanischen bzw. und pneumatischen Überlastkupplung typischerweise notwendig ist, kann in vielen Fällen vermieden werden. Somit können Wartungs- und Instandhaltungszeiten reduziert und die Produktionszeit erhöht werden. Zudem ermöglicht das elektronische Überlastkupplungssystem eine längere Lebensdauer des Extruderantriebs bei reduzierten Wartungs- und Ersatzeilkosten.

Durch den Wegfall der herkömmlichen Überlastkupplung muss zudem weniger Masse bewegt werden, sodass auch die Betriebskosten des Extruderantriebs reduziert werden können. Denn Sensoren, wie beispielsweise Drehmomentflansche sind deutlich leichter, als herkömmliche Überlastkupplung.

Die Erfassung der Drehmomentdaten kann insbesondere kontinuierlich erfolgen. Beispielsweise kann der zumindest eine Drehmomentsensor Drehmomentdaten mit einer Abtastrate im Bereich von 100 ms bis 0,05 ms, bevorzugt im Bereich von 25 ms bis 0,1 ms und besonders bevorzugt im Bereich von 10 ms bis 0,1 ms und insbesondere bevorzugt im Bereich von 5 ms bis 3 ms erfassen. Die Abtastrate kann konstant oder variabel sein und vom ermittelten Lastzustand abhängen. Wurde beispielsweise ein Lastzustand ermittelt, der weit unter einem kritischen Lastzustand liegt, kann die Abtastrate geringer sein. Steigt die Last am Extruderantrieb und somit eine Kritikalität des Lastzustands, kann die Abtastrate erhöht werden.

Insbesondere bei der Verwendung einer konstanten Abtastrate muss die Abtastrate so kurz gewählt werden, dass auch kurzzeitige Störungen bzw. Anstiege des Drehmoments zuverlässig erkannt werden.

Die Überlaststeuerungseinrichtung kann weiterhin dazu eingerichtet sein, den Lastzustand des Extruderantriebs basierend auf bearbeiteten Drehmomentdaten zu ermitteln, wobei die erfassten und/oder bearbeiten Drehmomentdaten zumindest eines der folgenden umfassen:
- einen Drehmomentwert;
- einen zeitlich gemittelten Drehmomentwert;
- einen zeitlichen Gradienten eines Drehmomentwerts;
- eine Frequenzanalyse eines Drehmomentwerts;
- eine Winkelbereichsanalyse eines Drehmomentwerts, und/oder
- ein zeitlicher Verlauf eines Drehmomentwerts.

Der Drehmomentwert kann ein Absolutwert sein, oder ein Vorzeichen umfassen und somit die Drehrichtung angeben. Somit kann auch eine falsche Drehrichtung erkannt werden und die Überlaststeuerungseinrichtung kann entsprechend in die Motorsteuerung eingreifen. Wird ein zeitlich gemittelter Drehmomentwert zur Ermittlung des Lastzustands genutzt, können unkritische Lastspitzen vernachlässigt werden. Der zeitliche Gradient des Drehmomentwerts ermöglicht es unterschiedlich zu reagieren, je nachdem, ob ein Lastanstieg schnell oder langsam von sich geht. Die Frequenzanalyse und/oder Winkelbereichsanalyse des Drehmomentwerts ermöglicht weitere Rückschlüsse, wie beispielsweise Verschleiß oder Beschädigungen an Bauteilen, insbesondere an Lagern, frühzeitig zu erkennen und darauf zu reagieren. Oftmals ist es möglich Schäden schon vor dem Versagen zu erkennen. Ebenso kann der zeitliche Verlauf des Drehmomentwerts auf Verschleiß oder Beschädigungen an Bauteilen hinweisen.

Wurde ein Verschleiß und/oder Schaden erkannt, kann die Ursache behoben werden und der Extruderantrieb im Anschluss wieder mit den üblichen Betriebsparametern betrieben werden. Ebenso ist es möglich, bei einem erkannten Verschleiß/Schaden das maximal erlaubte Drehmoment zu reduzieren und den Extruderantrieb in einem Notbetrieb weiter zu betreiben, bis beispielsweise erforderliche Ersatzteile vor Ort sind und ausgetauscht werden können.

Die Überlaststeuerungseinrichtung kann zudem dazu eingerichtet sein, abhängig vom ermittelten Lastzustand des Extruderantriebs, und eines Betriebszustands eines Extruders der dem Extruderantriebs zugeordnet ist und/oder einer Energieaufnahme des Extruderantriebs in die Motorsteuerung des Extruderantriebs einzugreifen, um ein Motordrehmoment eines der Motorsteuerung zugeordneten Motors zu reduzieren.

Wird neben dem ermittelten Lastzustand auch ein Betriebszustand und/oder die Energieaufnahme berücksichtigt, um zu entscheiden, ob in die Motorsteuerung des Extruderantriebs eingegriffen werden muss, ist eine variablere Steuerung/Regelung des Extruderantriebs möglich. Beim Betriebszustand des Extruders kann beispielsweise der Füllgrad des Extruders, die gewünschte Ausstoßrate des Extruders und/oder das zu extrudierende Material berücksichtigt werden, sodass kurzzeitig höhere Lastzustände toleriert werden können.

Wird neben dem ermittelten Lastzustand auch die Energieaufnahme des Extruderantriebs berücksichtigt, steht eine weitere Eingangsgröße zur Verfügung, die eine präzisere Bestimmung der Notwendigkeit des Eingreifens ermöglicht.

Die Überlaststeuerungseinrichtung kann weiterhin dazu eingerichtet sein, abhängig vom ermittelten Lastzustand des Extruderantriebs und/oder des Betriebszustands des Extruders, und/oder einer Energieaufnahme des Extruderantriebs eine Überlast-Warnung auszugeben. Bevor eine Reduktion des Motordrehmoments notwendig wird, kann der Benutzer also gewarnt werden und etwaige Fehlerquellen suchen und abstellen und/oder zumindest einen Betriebsparameter des Extruderantriebs anpassen, um frühzeitig den Lastzustand des Extruderantriebs wieder zu senken.

Weiterhin kann die Überlaststeuerungseinrichtung dazu eingerichtet sein das Motordrehmoment eines der Motorsteuerung zugeordneten Motors zu reduzieren (durch entsprechenden Eingriff in die Motorsteuerung), wobei die Reduzierung des Motordrehmoments eine der folgenden Maßnahmen umfassen kann:
- Freigabe einer Regelung des Motors in der Motorsteuerung: Folglich muss zumindest eine vorgegebene Soll-Größe (beispielsweise eine Soll-Drehzahl oder ein Soll-Drehmoment) nicht mehr erreicht werden.
- Vorgabe eines Sollwerts des Motordrehmoments des Motors: Zur Reduzierung des Motordrehmoments kann die Überlaststeuerungseinrichtung Motorsteuerung einen reduzierten Sollwert des Motordrehmoments vorgeben.
- Trennen der Motorsteuerung von einer Energiequelle, sodass weder die Motorsteuerung noch der Motor mit elektrischer Antriebsenergie versorgt werden.
- Trennen des Motors von der Motorsteuerung, sodass die Motorwicklungen stromlos geschalten werden.
- Aktivieren einer Impulssperre in der Motorsteuerung, sodass der Motor kein Drehmoment mehr aufbaut.
- Aktives Bremsen des Motors mittels der Motorsteuerung. Dies kann durch die Aktivierung von (mechanischen) Bremsen erfolgen und/oder durch die Vorgabe eines reduzierten bzw. gegenläufigen Soll-Drehmoments.

Die Überlaststeuerungseinrichtung kann insbesondere dazu eingerichtet sein, unterschiedliche Maßnahmen zur Reduzierung des Motordrehmoments abhängig vom ermittelten Lastzustand auszuführen, wobei die unterschiedlichen Maßnahmen eine unterschiedlich starke Reduzierung des Motordrehmoments zur Folge haben.

Beispielsweise können unterschiedliche Reaktionsschwellen des Lastzustands definiert sein, die bei Überschreiten unterschiedliche Maßnahmen zur Reduzierung des Motordrehmoments auslösen. Diese Reaktionsschwellen können zudem vom jeweiligen Betriebszustand des Extruders abhängen und optional angepasst werden.

In einem Beispiel wird ein Nenndrehmoment (insbesondere abhängig vom Betriebszustand), also ein maximal zulässiges Dauerdrehmoment festgelegt. Dieses Nenndrehmoment kann ein Nenndrehmoment der Abtriebswelle des Motors oder des Getriebes sein.

Ergeben die ermittelten Drehmomentdaten, dass das Nenndrehmoment im Bereich von -5% bis 110 % liegt, kann beispielsweise von einem Normalbetrieb und einem zulässigen Lastzustand ausgegangen werden.

Ergeben die ermittelten Drehmomentdaten, dass das Nenndrehmoment im Bereich von 110% bis 120 % liegt, kann beispielsweise eine Warnung ausgegeben werden.

Ergeben die ermittelten Drehmomentdaten, dass das Nenndrehmoment im Bereich von 120% bis 135 % liegt, kann beispielsweise ein reduziertes Soll-Drehmoment vorgegeben oder die Regelung des Motors freigegeben werden.

Ergeben die ermittelten Drehmomentdaten, dass das Nenndrehmoment im Bereich von 135% bis 150 % liegt, kann der Motor beispielsweise aktiv gebremst werden.

Ergeben die ermittelten Drehmomentdaten, dass das Nenndrehmoment im Bereich unter -5% oder über 150% liegt, kann der Motor bzw. die Motorsteuerung stromlosgeschalten und/oder eine Impulssperre aktiviert werden.

Neben den Reaktionsschwellen für das Nenndrehmoment können alternativ oder zusätzlich auch Reaktionsschwellen für den zeitlichen Gradienten eines Drehmomentwerts bestimmt werden.

In einem Beispiel wird ein Nenn-Gradient festgelegt. Dieser Nenn-Gradient kann ein Nenn-Gradient des Drehmoments an der Abtriebswelle des Motors oder des Getriebes sein.

Ergeben die ermittelten Drehmomentdaten, dass der Nenn-Gradient im Bereich von 0% bis 15% liegt, kann beispielsweise von einem Normalbetrieb und einem zulässigen Lastzustand ausgegangen werden.

Ergeben die ermittelten Drehmomentdaten, dass der Nenn-Gradient im Bereich von 15% bis 25 % liegt, kann beispielsweise eine Warnung ausgegeben werden.

Ergeben die ermittelten Drehmomentdaten, dass der Nenn-Gradient im Bereich von 25% bis 100 % liegt, kann beispielsweise ein reduziertes Soll-Drehmoment vorgegeben oder die Regelung des Motors freigegeben werden, oder aktiv gebremst werden.

Ergeben die ermittelten Drehmomentdaten, dass der Nenn-Gradient im Bereich über 100% liegt, kann der Motor bzw. die Motorsteuerung stromlosgeschalten und/oder eine Impulssperre aktiviert werden.

Es versteht sich, dass die zuvor genannten Maßnahmen und Reaktionsschwellen zur exemplarisch sind und je nach Art des Extruders/des Extruderantriebs und/oder des Betriebszustands anders gesetzt werden können.

Weiterhin kann die Überlaststeuerungseinrichtung dazu eingerichtet sein, ein Drehmomentprofil basierend auf den erfassten Drehmomentdaten zu erstellen und/oder zu aktualisieren. Das Drehmomentprofil kann einen zeitlichen Verlauf unterschiedlicher Drehmomentdaten (z.B. Drehmomentwerte, zeitlich gemittelte Drehmomentwerte; zeitliche Gradienten eines Drehmomentwerts, Frequenzanalyse eines Drehmomentwerts, Winkelbereichsanalyse eines Drehmomentwerts) umfassen. Zudem können die jeweiligen Drehmomentwerte entsprechenden Betriebszuständen des Extruders und/oder einer Energieaufnahme des Extruderantriebs zugeordnet sein. Basierend auf dem Drehmomentprofil kann die Überlaststeuerungseinrichtung einen Lastzustand des Extruderantriebs ermitteln. Beispielsweise kann die Überlaststeuerungseinrichtung die Drehmomentdaten eines aktuellen Betriebszustands mit einem zuvor erstellten Drehmomentprofil vergleichen und so einen aktuellen Lastzustand ermitteln.

Insbesondere kann die Ermittlung des Lastzustandes KI-basiert sein und/oder Machine-Learning umfassen. Somit kann die Ermittlung des Lastzustands genauer erfolgen.

Zudem kann die Überlaststeuerungseinrichtung dazu eingerichtet sein abhängig vom ermittelten Lastzustand in eine Motorsteuerung des Extruderantriebs einzugreifen, um das Motordrehmoment eines der Motorsteuerung zugeordneten Motors wieder zu erhöhen. Entsprechend kann eine vorherige Reduktion des Motordrehmoments wieder zurückgenommen werden, wenn es der aktuelle Lastzustand erlaubt.

Die Aufgabe wird weiterhin durch einen Extruderantriebsystem gelöst, welches das zuvor beschriebene elektronische Überlastkupplungssystem umfasst. Zudem umfasst das Extruderantriebsystem einen Extruderantrieb, der zumindest einen Motor (z.B. ein Drehstrommotor), eine Motorsteuerung (z.B. ein Frequenzumrichter) und ein Getriebe umfasst. Die Motorsteuerung steuert den Motor an und der Motor treibt das Getriebe an.

Das Getriebe ist zudem dazu eingerichtet einen Extruder anzutreiben. Beispielsweise kann das Getriebe die Antriebsleistung des Motors gleichmäßig auf die Extruderschnecken eines Doppelschneckenextruders verteilen.

Der zumindest einen Drehmomentsensor des elektronischen Überlastkupplungssystems ist dazu eingerichtet Drehmomentdaten des Extruderantriebs zu erfassen und die Überlaststeuerungseinrichtung ist dazu eingerichtet basierend auf den erfassten Drehmomentdaten einen Lastzustand des Extruderantriebs zu ermitteln, wobei die Überlaststeuerungseinrichtung weiterhin dazu eingerichtet ist, abhängig vom ermittelten Lastzustand in die Motorsteuerung des Extruderantriebs einzugreifen, um ein Motordrehmoment des Motors zu reduzieren. Somit können die oben genannten Vorteile in dem Extruderantriebsystem realisiert werden.

Das Extruderantriebsystem kann weiterhin einen Extruder, insbesondere einen Doppelschneckenextruder umfassen, wobei der Extruder von dem Getriebe angetrieben wird.

Weiterhin wird die Aufgabe durch ein Verfahren zum sicheren Betreiben eines Extruders gelöst, wobei das Verfahren von einem elektronischen Überlastkupplungssystem, wie zuvor beschrieben, ausgeführt werden kann und zumindest die folgenden Schritte umfasst:
- Erfassen von Drehmomentdaten eines Extruderantriebs;
- basierend auf den erfassten Drehmomentdaten, ermitteln eines Lastzustands des Extruderantriebs;
- Bestimmen, ob der ermittelte Lastzustand ein Eingreifen in eine Motorsteuerung des Extruderantriebs notwendig macht;
- Optional: Ausgeben einer Überlast-Warnung, dass ein kritischer Lastzustand ermittelt wurde;
- Eingreifen in die Motorsteuerung des Extruderantriebs, um ein Motordrehmoment eines der Motorsteuerung zugeordneten Motors zu reduzieren.

Das Bestimmen, ob der ermittelte Lastzustand ein Eingreifen in eine Motorsteuerung des Extruderantriebs notwendig macht kann weiterhin auf einem Betriebszustand des Extruders und/oder einer Energieaufnahme des Extruderantriebs basieren.

Zur Ausführung des Verfahrens kann das elektronischen Überlastkupplungssystem zumindest einen Prozessor und optional einen Speicher aufweisen. Ebenso kann das elektronischen Überlastkupplungssystem und insbesondere die Überlaststeuerungseinrichtung in die Motorsteuerung integriert sein, oder über eine Schnittstelle mit der Motorsteuerung kommunizieren, sodass das Verfahren - zumindest teilweise - auf einem Prozessor der Motorsteuerung ausgeführt werden kann.

Zudem wird die Aufgabe durch ein Computerprogramm, welches von einem Prozessor ausführbare Instruktionen umfasst gelöst, die, wenn sie von dem Prozessor ausgeführt werden den Prozessor dazu veranlassen das obige Verfahren auszuführen.

Einige der hier in Betracht gezogenen Ausführungsformen werden unter Bezugnahme auf die beigefügten Abbildungen ausführlicher beschrieben. Andere Ausführungsformen sind jedoch im Rahmen des hier offengelegten Gegenstandes enthalten. Der offengelegte Teilgegenstand ist nicht so auszulegen, dass er nur auf die hier dargelegten Ausführungsformen beschränkt ist; vielmehr werden diese Ausführungsformen als Beispiele angeführt, um dem Fachmann den Umfang des Gegenstandes zu vermitteln.

### Kurze Beschreibung der Zeichnungen

Weitere Merkmale und Vorteile der Erfindung ergeben sich aus der nachfolgenden Beschreibung sowie aus dem beigefügten Zeichnungen, auf die Bezug genommen wird. In den Zeichnungen zeigen:
- Fig. 1: zeigt ein herkömmliches System zum Antreiben eines Extruders;
- Fig. 2: zeigt eine schematische Darstellung eines erfindungsgemäßen Extruderantriebsystems, und
- Fig. 3: zeigt ein schematisches Ablaufdiagramm eines Verfahrens zum sicheren Betreiben eines Extruders.

### Ausführliche Beschreibung der Zeichnungen

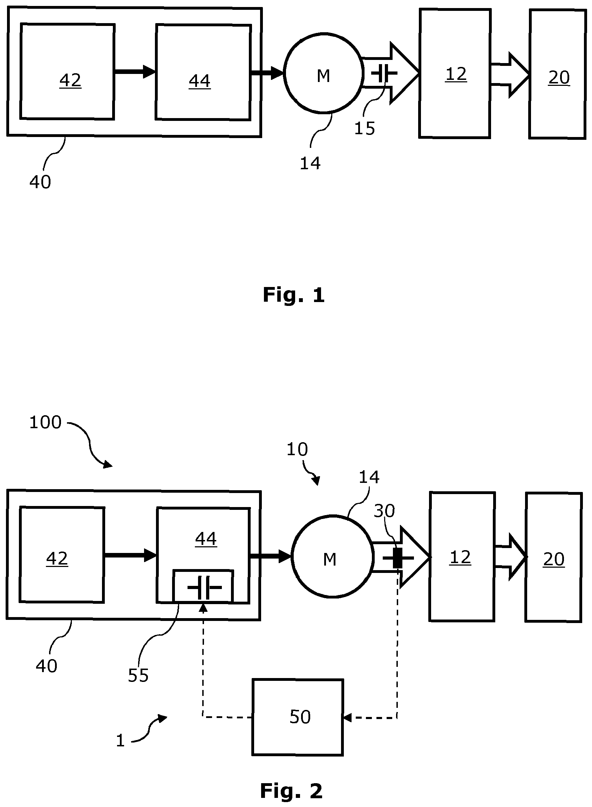

Fig. 1 zeigt ein herkömmliches System zum Antreiben eines Extruders 20. Der Extruder 20, beispielsweise ein Doppelschneckenextruder, wird über einen Motor 14 und ein Getriebe 12 angetrieben. Der Motor wird mittels einer Motorsteuerung 40 angesteuert (bzw. geregelt). Die Motorsteuerung umfasst eine Drehzahlregelung 42 und eine Drehmomentregelung 44 und/oder Stromregelung. Diese können als Kaskadenregelung ausgeführt sein. Um Schäden am Extruderantrieb zu vermeiden, ist zwischen dem Motor 14 und dem Getriebe 12 eine Überlastkupplung 15 vorgesehen. Diese Überlastkupplung kann beispielsweise eine pneumatische oder mechanische Überlastkupplung sein, die jedoch die eingangs beschriebenen Nachteile aufweist.

Fig. 2 zeigt eine schematische Darstellung eines erfindungsgemäßen Extruderantriebsystems 100. Statt einer pneumatische oder mechanische Überlastkupplung wird hier ein erfindungsgemäßes elektronisches Überlastkupplungssystem 1 für den Extruderantrieb 10 genutzt. Der Extruderantrieb 10 umfasst ein Extrudergetriebe 12 und einen Motor 14, beispielsweise einen Drehstrommotor, die über eine Motorwelle miteinander verbunden sind. Über eine Getriebewelle kann das Extrudergetriebe 12 einen Extruder 20 antreiben. Der Motor 14 wird mittels einer Motorsteuerung 40 angesteuert (bzw. geregelt). Die Motorsteuerung 40 umfasst eine Drehzahlregelung 42 und eine Drehmomentregelung 44 und/oder Stromregelung. Diese können als Kaskadenregelung ausgeführt sein.

Um einen aktuellen Lastzustand ermitteln zu können und entsprechend Überlastzustände und/oder Beschädigungen des Extruderantriebs und/oder des Extruders zu vermeiden, ist in der hier gezeigten Ausführungsform an der Motorwelle ein Drehmomentsensor 30, beispielsweise in Form eines Drehmomentflansches, angeordnet. Alternativ oder zusätzlich kann auch an der Getriebewelle (oder an anderer Stelle des Extruderantriebsystems) ein Drehmomentsensor angeordnet sein. Mittels des Drehmomentsensors/der Drehmomentsensoren können Drehmomentdaten des Extruderantriebs 10 erfasst werden. Eine Überlaststeuerungseinrichtung 50 kann dann basierend auf den erfassten Drehmomentdaten einen Lastzustand des Extruderantriebs ermitteln, bestimmen, ob der ermittelte Lastzustand ein Eingreifen notwendig macht und - sofern erforderlich - in die Motorsteuerung 40 des Extruderantriebs 10 eingreifen, um ein Motordrehmoment des der Motorsteuerung 40 zugeordneten Motors 14 zu reduzieren. Optional kann die Überlaststeuerungseinrichtung 50 auch eine Überlast-Wartung ausgeben.

Um den Eingriff in die Motorsteuerung 40 zu ermöglichen, ist eine Schnittstelle 55 an der Motorsteuerung 40, insbesondere an der Drehmomentregelung 44 und/oder Stromregelung, vorgesehen. Diese Schnittstelle kann in Software und/oder Hardware ausgeführt sein. Insbesondere ist es auch möglich, die Überlaststeuerungseinrichtung 50 in die Motorsteuerung 40 zu integrieren.

Beispielsweise kann das erfindungsgemäße Überlastkupplungssystem einfach in bestehenden Extrusionsanlagen nachgerüstet werden. So ist es möglich die mit Nachteilen behafteten herkömmlichen Überlastkupplungen durch das erfindungsgemäße Überlastkupplungssystem 1 zu ersetzen. Hierzu muss beispielsweise an der Motorwelle und/oder an der Getriebewelle ein Drehmomentsensor angeordnet werden und eine Überlaststeuerungseinrichtung 50 bereitgestellt werden. Das Bereitstellen der Überlaststeuerungseinrichtung kann beispielsweise durch ein Software-Update der Motorsteuerung 40 erfolgen.

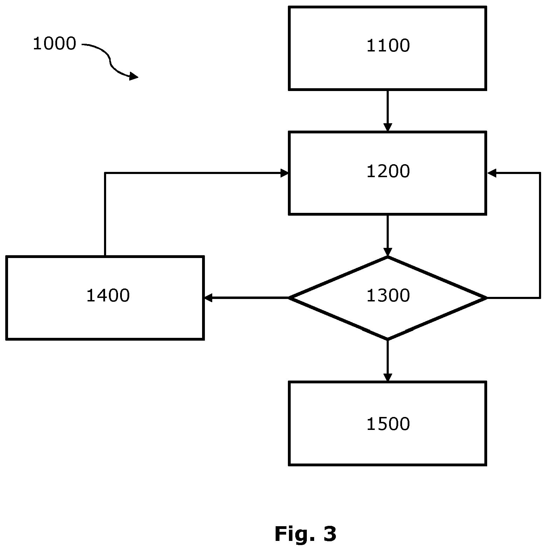

Fig. 3 zeigt ein schematisches Ablaufdiagramm eines Verfahrens 1000 zum sicheren Betreiben eines Extruders, wie er beispielsweise in Figur 2 als Teil eines Extruderantriebsystems 100 dargestellt ist. Das Verfahren 1000 kann von einem elektronischen Überlastkupplungssystem ausgeführt werden und umfasst die folgenden Schritte:
- Erfassen 1100 von Drehmomentdaten eines Extruderantriebs 10;
- basierend auf den erfassten Drehmomentdaten, ermitteln 1200 eines Lastzustands des Extruderantriebs 10;
- Bestimmen 1300, ob der ermittelte Lastzustand ein Eingreifen in eine Motorsteuerung 40 des Extruderantriebs 10 notwendig macht;
- optional Ausgeben 1400 einer Überlast-Warnung, dass ein kritischer Lastzustand ermittelt wurde;
- Eingreifen 1500 in die Motorsteuerung 40 des Extruderantriebs 10, um ein Motordrehmoment eines der Motorsteuerung 40 zugeordneten Motors 14 zu reduzieren.

Insbesondere die Schritte 1100, 1200 und 1300 können stetig wiederholt werden, um den Lastzustand des Extruderantriebs permanent zu überwachen. Die Abtastrate kann im Bereich von einigen Millisekunden liegen, beispielsweise im Bereich von 100 ms bis 0,05 ms, bevorzugt im Bereich von 25 ms bis 0,1 ms, besonders bevorzugt im Bereich von 10 ms bis 0,1 ms und insbesondere bevorzugt im Bereich von 5 ms bis 3 ms.

Das Bestimmen, ob der ermittelte Lastzustand ein Eingreifen in eine Motorsteuerung des Extruderantriebs notwendig macht kann weiterhin auf einem Betriebszustand des Extruders und/oder einer Energieaufnahme des Extruderantriebs basieren.

Die vorliegende Erfindung kann natürlich auch auf andere Weise als die hierin dargelegten ausgeführt werden, ohne dass dadurch wesentliche Merkmale der Erfindung beeinträchtigt werden. Die vorliegenden Ausführungsformen sind in jeder Hinsicht als beispielhaft und nicht einschränkend zu betrachten, und alle Änderungen, die in den Bedeutungs- und Äquivalenzbereich der beigefügten Ansprüche fallen, sollen darin eingeschlossen sein.

### Bezugszeichenliste

- 1: Überlastkupplungssystem
- 10: Extruderantrieb
- 12: Extrudergetriebe
- 14: Motor
- 15: Überlastkupplung (mechanisch)
- 20: Extruder
- 30: Drehmomentsensor
- 40: Motorsteuerung (z.B. Frequenzumrichter)
- 42: Drehzahlregelung
- 44: Drehmomentregelung/Stromregelung
- 50: Überlaststeuerungseinrichtung
- 55: Überlast-Drehmomentregelung
- 100: Extruderantriebsystem
- 1000: Verfahren
- 1100: Erfassen von Antriebsdrehmomentdaten
- 1200: Ermitteln eines Lastzustandes
- 1300: Bewerten des Lastzustandes
- 1400: Ausgeben einer Warnung
- 1500: Eingreifen in die Motorsteuerung

## Patentansprüche

1. Elektronisches Überlastkupplungssystem (1) für einen Extruderantrieb (10), wobei das Überlastkupplungssystem (1) folgendes umfasst:
zumindest einen Drehmomentsensor (30), der dazu eingerichtet ist Drehmomentdaten des Extruderantriebs zu erfassen, und
eine Überlaststeuerungseinrichtung (50), die dazu eingerichtet ist basierend auf den erfassten Drehmomentdaten einen Lastzustand des Extruderantriebs (10) zu ermitteln, wobei die Überlaststeuerungseinrichtung (50) weiterhin dazu eingerichtet ist,
abhängig vom ermittelten Lastzustand in eine Motorsteuerung (40) des Extruderantriebs (10) einzugreifen, um ein Motordrehmoment eines der Motorsteuerung (40) zugeordneten Motors (14) zu reduzieren.

2. Elektronisches Überlastkupplungssystem (1) nach Anspruch 1, wobei der zumindest eine Drehmomentsensor (30), dazu eingerichtet ist Drehmomentdaten einer Abtriebswelle eines Motors (14) und/oder Drehmomentdaten einer Abtriebswelle eines Getriebes (12) des Extruderantriebs (10) zu erfassen.

3. Elektronisches Überlastkupplungssystem (1) nach Anspruch 1 oder 2, wobei der zumindest eine Drehmomentsensor (30) ein Drehmomentflansch ist.

4. Elektronisches Überlastkupplungssystem (1) nach einem der vorhergehenden Ansprüche, wobei der zumindest eine Drehmomentsensor (30) dazu eingerichtet ist Drehmomentdaten mit einer Abtastrate im Bereich von 100 ms bis 0,05 ms, bevorzugt im Bereich von 25 ms bis 0,1 ms, besonders bevorzugt im Bereich von 10 ms bis 0,1 ms und insbesondere bevorzugt im Bereich von 5 ms bis 3 ms zu erfassen, wobei die Abtastrate vom ermittelten Lastzustand abhängig sein kann.

5. Elektronisches Überlastkupplungssystem (1) nach einem der vorhergehenden Ansprüche, wobei die Überlaststeuerungseinrichtung (50) dazu eingerichtet ist den Lastzustand des Extruderantriebs (10) basierend auf bearbeiteten Drehmomentdaten zu ermitteln, wobei die erfassten und/oder bearbeiten Drehmomentdaten zumindest eines der folgenden umfassen:
- einen Drehmomentwert;
- einen zeitlich gemittelten Drehmomentwert;
- einen zeitlichen Gradienten eines Drehmomentwerts;
- eine Frequenzanalyse eines Drehmomentwerts;
- eine Winkelbereichsanalyse eines Drehmomentwerts, und/oder
- ein zeitlicher Verlauf eines Drehmomentwerts.

6. Elektronisches Überlastkupplungssystem (1) nach einem der vorhergehenden Ansprüche, wobei
die Überlaststeuerungseinrichtung (50) dazu eingerichtet ist abhängig vom ermittelten Lastzustand des Extruderantriebs (10), und eines Betriebszustands eines Extruders (20) der dem Extruderantriebs (10) zugeordnet ist und/oder einer Energieaufnahme des Extruderantriebs in die Motorsteuerung (40) des Extruderantriebs (10) einzugreifen, um ein Motordrehmoment eines der Motorsteuerung (40) zugeordneten Motors (14) zu reduzieren.

7. Elektronisches Überlastkupplungssystem (1) nach einem der vorhergehenden Ansprüche, wobei die Überlaststeuerungseinrichtung (50) dazu eingerichtet ist abhängig vom ermittelten Lastzustand des Extruderantriebs (10) und/oder des Betriebszustands des Extruders, und/oder einer Energieaufnahme des Extruderantriebs (10) eine Überlast-Warnung auszugeben und/oder
das Motordrehmoment eines der Motorsteuerung (40) zugeordneten Motors (14) zu reduzieren, wobei die Reduzierung des Motordrehmoments eine der folgenden Maßnahmen umfassen kann:
Freigabe einer Regelung des Motors (14) in der Motorsteuerung (40);
Vorgabe eines Sollwerts des Motordrehmoments des Motors (14);
Trennen der Motorsteuerung (40) von einer Energiequelle;
Trennen des Motors (14) von der Motorsteuerung (40);
Aktivieren einer Impulssperre in der Motorsteuerung (40);
Aktives Bremsen des Motors (14) mittels der Motorsteuerung (40).

8. Elektronisches Überlastkupplungssystem (1) nach dem vorhergehenden Anspruch, wobei die Überlaststeuerungseinrichtung (50) dazu eingerichtet ist unterschiedliche Maßnahmen zur Reduzierung des Motordrehmoments abhängig vom ermittelten Lastzustand auszuführen, wobei die unterschiedlichen Maßnahmen eine unterschiedlich starke Reduzierung des Motordrehmoments zur Folge haben.

9. Elektronisches Überlastkupplungssystem (1) nach einem der vorhergehenden Ansprüche, wobei die Überlaststeuerungseinrichtung (50) dazu eingerichtet ist ein Drehmomentprofil basierend auf den erfassten Drehmomentdaten zu erstellen und/oder zu aktualisieren, und wobei die Überlaststeuerungseinrichtung (50) dazu eingerichtet ist basierend auf dem Drehmomentprofil einen Lastzustand des Extruderantriebs (10) zu ermitteln.

10. Elektronisches Überlastkupplungssystem (1) nach einem der vorhergehenden Ansprüche, wobei die Ermittlung des Lastzustandes KI-basiert ist und/oder Machine-Learning umfassen.

11. Elektronisches Überlastkupplungssystem (1) nach einem der vorhergehenden Ansprüche, wobei die Überlaststeuerungseinrichtung (50) dazu eingerichtet ist abhängig vom ermittelten Lastzustand in eine Motorsteuerung (40) des Extruderantriebs (10) einzugreifen, um das Motordrehmoment eines der Motorsteuerung (40) zugeordneten Motors (14) wieder zu erhöhen.

12. Extruderantriebsystem (100), umfassend
ein elektronisches Überlastkupplungssystem (1) nach einem der vorhergehenden Ansprüche, und
einen Extruderantrieb (10), der zumindest einen Motor (14), eine Motorsteuerung (40) und ein Getriebe (12) umfasst, wobei
die Motorsteuerung (40) den Motor (14) ansteuert und der Motor (14) das Getriebe (12) antreibt, und wobei das Getriebe (12) dazu eingerichtet ist einen Extruder (20) anzutreiben, wobei
der zumindest einen Drehmomentsensor (30) des elektronischen Überlastkupplungssystems (1), dazu eingerichtet ist Drehmomentdaten des Extruderantriebs (10) zu erfassen, und
die Überlaststeuerungseinrichtung (50), dazu eingerichtet ist basierend auf den erfassten Drehmomentdaten einen Lastzustand des Extruderantriebs (10) zu ermitteln, wobei die Überlaststeuerungseinrichtung (50) weiterhin dazu eingerichtet ist,
abhängig vom ermittelten Lastzustand in die Motorsteuerung (40) des Extruderantriebs (10) einzugreifen, um ein Motordrehmoment des Motors (14) zu reduzieren.

13. Extruderantriebsystem (100) nach Anspruch 12, weiterhin umfassend einen Extruder (20), insbesondere einen Doppelschneckenextruder, wobei der Extruder (20) von dem Getriebe (12) angetrieben wird.

14. Verfahren (1000) zum sicheren Betreiben eines Extruders (20), wobei das Verfahren (1000) von einem elektronischen Überlastkupplungssystem (1) nach einem der Ansprüche 1 bis 11 ausgeführt werden kann und die folgenden Schritte umfasst:
Erfassen (1100) von Drehmomentdaten eines Extruderantriebs (10);
basierend auf den erfassten Drehmomentdaten Ermitteln (1200) eines Lastzustands des Extruderantriebs (10);
Bestimmen (1300), ob der ermittelte Lastzustand ein Eingreifen in eine Motorsteuerung (40) des Extruderantriebs (10) notwendig macht;
optional Ausgeben (1400) einer Überlast-Warnung, dass ein kritischer Lastzustand ermittelt wurde;
Eingreifen (1500) in die Motorsteuerung (40) des Extruderantriebs (10), um ein Motordrehmoment eines der Motorsteuerung (40) zugeordneten Motors (14) zu reduzieren.

15. Computerprogramm, welches von einem Prozessor ausführbare Instruktionen umfasst, die, wenn sie von dem Prozessor ausgeführt werden den Prozessor dazu veranlassen ein Verfahren gemäß Anspruch 14 auszuführen.
